# EUROPEAN PATENT APPLICATION

(11) **EP 2 228 402 A1**
(43) Date of publication of application: **15.09.2010**
(21) Application number: 09154940.2
(22) Date of filing: 11.03.2009
(51) Int. Cl.: C08J 5/00

(54) **Carbon-Carbon Composites**

(71) Applicant: The Provost, Fellows and Scholars of the College of the Holy and Undivided Trinity of Queen Elizabeth near Dublin, Dublin 2 (IE)
(72) Inventor: Duesberg, Georg, Dublin 2 (IE); Lutz, Mark, Dublin 2 (IE)
(74) Representative: Lucey, Michael

(57) **Abstract**

The invention provides a method of making a nano-carbon structure comprising providing a first layer of nano-carbon particles; depositing a second layer of resin on said layer of nano-carbon particles; and annealing said first and second layers to provide a carbon composite nanostructure. The nano-carbon composites obtained according to the invention make excellent (transparent) electrical contact to Carbon Nanotunes resulting in high temperature stable, chemical inert, flexible and bio-compatible structures.

## Description

### Field of the Invention

The invention relates to Nano Carbon structures (NCS). In particular the invention relates to graphene and/or carbon nanotubes that exhibit novel mechanical, thermal and electrical properties.

### Background to the Invention

Nano Carbon structures (NCS), in particular graphene and carbon nanotubes, exhibit unique mechanical and electrical properties. Recently a substantial amount of effort has been put into the field of incorporating NCS in matrixes or to improve electrical contacts to NCS, which supports the exploitation of these properties. To exploit the mechanical properties the NCS have to be incorporated in a matrix and anchored with intense mechanical contact. To make use of the electrical conductivity properties NCS have to be made contactable to external elements, that heretofore has been difficult to achieve.

For the use of NCS networks as (flexible) electrodes has been investigated in detail. For example, a publication by Kaempgen, M.; Duesberg, G. S.; Roth, S. Applied Surface Science 2005, 252, (2), 425-429 discloses such a carbon based electrode. The problem that needs to be overcome with these types of structures is that the intertube contact of CNT networks, acting as electrodes, needs to be improved to enhance their overall conductivity and stability.

Carbon-carbon composites from carbon fibres produced for example by gas phase deposition of pyrolytic carbon is well known. Further the incorporation of Nanotubes in various polymer matrix, to exploit their mechanical properties has been investigated. These techniques are known in the art, however they do not relate to electrical contacts.

So far to date only metal contacts, made by PVD, evaporation etc. are in use, as referenced in the publications below. However the main problem with making these types of materials is that the metal to carbon contact gives rise to a Schottky barrier that is undesirable. Aside from metals been expensive, it is not possible to spin carbon material onto metal effectively. In addition some metal contacts are not biocompatible, thus restricting their use in medical applications. Some reports of electrically transparent contacts (without Schottky barrier) using Pd on e.g. large diameter CNTs, have been reported so far.

Different examples of CNT structures and devices are disclosed in the following papers:
Seidel, R.; Graham, A. P.; Unger, E.; Duesberg, G. S.; Liebau, M.; Steinhoegl, W.; Kreupl, F.; Hoenlein, W.; Pompe, W. Nano Letters 2004, 4, (5), 831-834.
LeMieux, M. C.; Roberts, M.; Barman, S.; Jin, Y. W.; Kim, J. M.; Bao, Z. N. Science 2008, 321, (5885), 101-104.
Cao, Q.; Kim, H. S.; Pimparkar, N.; Kulkarni, J. P.; Wang, C. J.; Shim, M.; Roy, K.; Alam, M. A.; Rogers, J. A. Nature 2008, 454, (7203), 495-U4.
Oberlin, A. Carbon 2002, 40, (1), 7-24.

It is possible to make flexible electrical films using carbon nanotubes for different applications for example, conducting film nanotubes, thin film transistors and transparent flexible electrical circuits, as disclosed by:
Kaempgen, M.; Duesberg, G. S.; Roth, S. Applied Surface Science 2005, 252, (2), 425-429.
Seidel, R.; Graham, A. P.; Unger, E.; Duesberg, G. S.; Liebau, M.; Steinhoegl, W.; Kreupl, F.; Hoenlein, W.; Pompe, W. Nano Letters 2004, 4, (5), 831-834.
LeMieux, M. C.; Roberts, M.; Barman, S.; Jin, Y. W.; Kim, J. M.; Bao, Z. N. Science 2008, 321, (5885), 101-104.
Cao, Q.; Kim, H. S.; Pimparkar, N.; Kulkarni, J. P.; Wang, C. J.; Shim, M.; Roy, K.; Alam, M. A.; Rogers, J. A. Nature 2008, 454, (7203), 495-U4.

However none of the publications teach a mechanically or thermal stable electrode contact that overcomes the problems outlined above.

There is therefore a need to provide a nano carbon structure that improves conductivity and surface properties of CNT networks, and method of producing such a nano carbon structure, that overcomes the above mentioned problems.

### Summary of the Invention

According to the present invention there is provided, as set out in the appended claims, a method of making a nano-carbon structure comprising the steps of:
providing a layer of nano-carbon particles;
depositing a layer of resin on said layer of nano-carbon particles; and
annealing said first and second layers to provide a carbon composite nanostructure.

The present invention uses carbon (glassy and pyrolytic) as a matrix/contact for NCS. In order to do so, NCS are integrated within a resin matrix. Upon annealing the resin is converted into a conductive and inert material (glassy carbon). The so formed carbon-carbon composite enables the invention to exploit novel mechanical and electrical properties of nano-carbon structures, since it is conducting and mechanically stable itself. Due to intense contact it will also enhance the carbon intertube interactions.

The advantages of producing the nanostructure films according to the invention are that they make excellent (transparent) electrical contact to CNTs resulting in high temperature stable, chemical inert, flexible and bio-compatible structures.

According to the invention creating carbon- carbon composite is a novel way of contacting carbon nanostructures, especially small diameter CNTs with reduced formation of Schottky barriers.

Intense electrical and mechanical contacts to NCS materials will be established. This is due to the fact that the NC structures are incorporated in a reactive environment were C=C bonds (sp2) are formed and the shrinkage of the polymer matrix. This results in the exploitation of the unique mechanical properties of nano-carbon since this is limited by the binding and the properties of the matrix. In the carbon-carbon composites proposed the nano-carbon are strongly bound, giving reason to make use of their properties including the mechanical and thermal conductivity. The invention can provide applications as NCS Ohmic electrical contacts. The invention provides a thermally stable (up to 1000C) device is produced according to the method of the present invention.

Improvement in the conductance of carbon nanotubes NC networks is achieved according to the invention and can be used as transparent electrodes (i.e. with no Schottky barrier present).

It will be appreciated that the invention provides carbon-carbon composites which are mechanically stable, inert and have low resistance. The invention provides an improvement of conductivity and surface properties of CNT Networks and creates carbon-carbon contacts with low resistance.

In one embodiment the deposited layer of resin provides a resin matrix.

In one embodiment the step of annealing is performed in an inert gas atmosphere or a vacuum. By not having any oxygen present during the annealing step ensures much better results.

In one embodiment the step of annealing produces glassy carbon material. The glassy carbon comprises conductive and inert properties.

In one embodiment the step of annealing is performed at approximately 1000 degrees centigrade. The annealing temperature can be attained by having a temperature ramp rate of approximately 100 degrees centigrade per hour.

In one embodiment the step of providing the layer of nano-carbon particles comprises depositing thin layers of less than 10nm.

In a further embodiment of the present invention there is provided mixing nano-carbon particles and resin together; depositing the mixed material as a single layer; and annealing the mixture to provide a carbon composite nanostructure.

In one embodiment before said annealing step there is provided the step of structuring said nano-carbon structure either by photo-beam or e-beam lithography; performing a development step to remove unwanted resin; and establishing an electrical contact by said annealing step.

There is also provided a computer program comprising program instructions for causing a computer program to carry out the above method which may be embodied on a record medium, carrier signal or read-only memory.

### Brief Description of the Drawings

The invention will be more clearly understood from the following description of an embodiment thereof, given by way of example only, with reference to the accompanying drawings, in which:-
Figure 1 illustrates a) CNT incorporated in a resin by spin casting on top of an CNT network. b) resin after annealing compresses and coverts into conductive glassy carbon;
Figure 2 illustrates a CNT coating with resist and different stages to form an electrical contact;
Figure 3 illustrates a flow chart illustrating one embodiment of the process of the present invention;
Figure 4 illustrates a flow chart illustrating another embodiment of the process of the present invention;
Figure 5 illustrates an AFM and SEM image of a carbon nanotube contacted with three carbon leads and measured resistance between them;
Figure 6 illustrates a transistor entirely made out of carbon according to one aspect of the invention; and
Figure 7 illustrates a four point measuring arrangement, with Contact pads, made out of conducting carbon and raman spectrum of the carbon film.

### Detailed Description of the Drawings

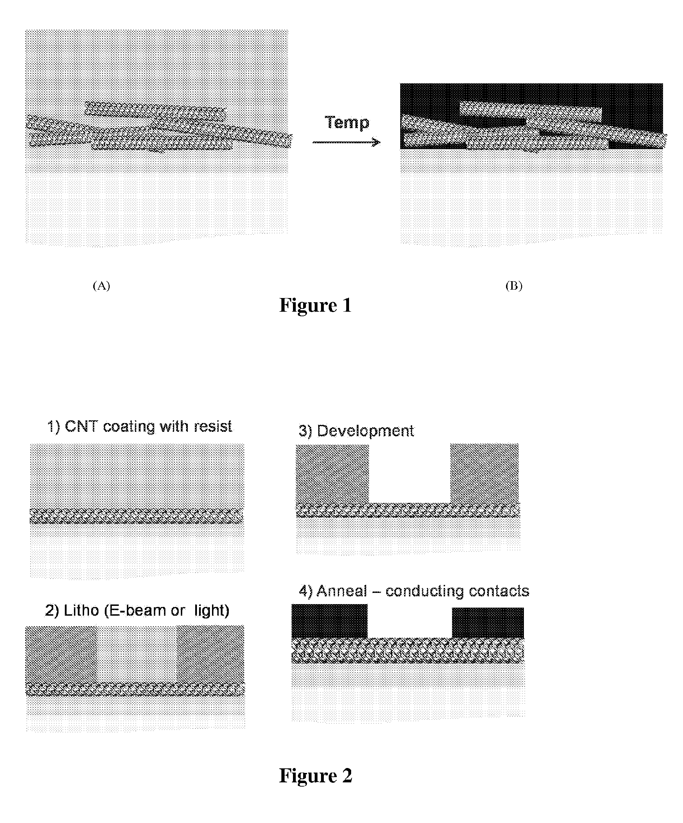

Referring now to the drawings and initially Figures 1 and 2, the invention comprises three main aspects:
1) fabricate carbon-carbon composites;
2) transparent thin film carbon-carbon composites; and
3) establish electrical contacts (leads) to NCS.

In relation to the first aspect, nano carbon particles, for example carbon tubes, are deposited on a surface as shown in Figure 1. A layer of resin is deposited on the layer of nano carbon particles. The layer of resin can be spin casted onto previously deposited carbon nanostructures.

The underlaying layer of nano-carbon material can be for example CVD grown, vertical MWCNTs, SWCNT networks or spray deposited graphene flakes. The resin can be a spin coated resin to cover/immerse the carbon nanostructures thoroughly to define a resin matrix. In this way carbon composites of thickness of typically < 100 nm thickness can be obtained.

The next important step is an annealing step performed in an inert atmosphere, such that the resin is converted to glassy carbon. In this way a carbon carbon composite is obtained. The annealing step typically takes place in an inert or forming gas atmosphere at temperatures of 1000C. The annealing temperature is attained by having a temperature ramp rate of approximately 100 degrees centigrade (or suitable fraction of the final annealing temperature) per hour. It is important that no oxygen is present during the annealing step. The carbon nano-structures do not get destroyed during this anneal step in the inert atmosphere and allows a compact composite to be formed.

In a second aspect the invention provides for enhancement of nano carbon intertube contacts in transparent thin film networks (i.e. with no Schottky barrier present) comprising a layer of carbon nano tubes. Heretofore, a thin layer of metal has been sputtered onto the nano carbon inter-tube contacts to improve the conductivity from one carbon nano tube to the next carbon nano tube. This process of using metal is difficult to achieve and expensive to provide. The invention can be implemented so that very thin layers of carbon can be deposited in the same way as described above, with reference to Figure 1, but with very thin layers of deposition < 10nm, to maintain transparency of the nano-carbon network. Instead of metal the nano-carbon network is coated with resin. The annealing step produces a layer of glassy carbon that allows the tubes contact and conduct from one nano carbon tube to the next nanocarbon tube. The glassy carbon provides a much simpler and effective medium to improve the conductivity between adjacent carbon tubes. It will be appreciated that this aspect of the invention has important applications for providing flexible displays, electronic paper, etc. The glassy carbon medium further provides higher mechanical stability and a uniform surface than using metal. It will be appreciated that before the step of annealing patterning on or structuring of the nano-carbon tube network can be performed either by photo- or e-beam lithography. After the annealing step any unwanted nano-carbon composite or tubes can be removed by using an oxygen etch.

Referring to Figure 2 illustrates a third aspect of the invention. To make electrical contacts to individual NCs, or networks of NCs, resins which can be structured by lithography, e.g. photo- or e-beam lithography, can be used. The resins, in this case often referred as (photo-) resists, are structured and developed before the annealing step. In this way it is possible to make structured glassy carbon structures with feature sizes as small as 100nm and of thicknesses below 10nm. When applied on top of NCs as described above, followed by patterning and annealing, the underlying NCs are contacted directly with conducting leads to establish an electrical contact. This process is illustrated in Steps 1 to 4 of Figure 2.

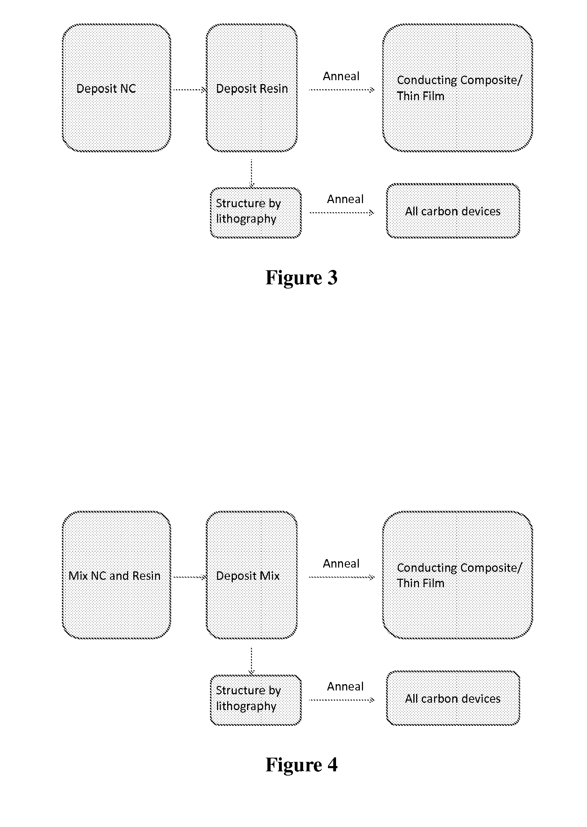

Referring to the flow chart of Figure 3 illustrates operation of the invention. In step 1 nano carbon particles are deposited on a surface. In step 2 a layer of resin is deposited on the nano carbon particles. In step 3 the annealing step in an inert atmosphere is performed to produce the carbon composite nano-structure. To make electrical contacts to individual NCs, or networks of NCs, resins which can be structured by lithography, e.g. photo- or e-beam lithography, can be used.

A second embodiment of the invention is illustrated by the flow chart in Figure 4. A second approach is to disperse the carbon nanostructures and the resin (i.e. pre-mixing the nano-carbon particles and the resin) and then deposit the mixture as a layer. The dispersion can for example be spin-casted, or drop-casted to obtain the desired structures. Composite materials with multi-walled and single walled CNTs are obtained by this method. To make electrical contacts to individual NCs, or networks of NCs, resins which can be structured by lithography, e.g. photo- or e-beam lithography, can be used.

It will be appreciated that the process of the present invention provides a new method to create electrode pattern to make electrical contact to nano-structures such as carbon nanotubes or graphene, such that successful contacting of multi-walled and single walled CNTs is achieved. Therefore this technique provides a method to produce all carbon devices such as transistors and sensors.

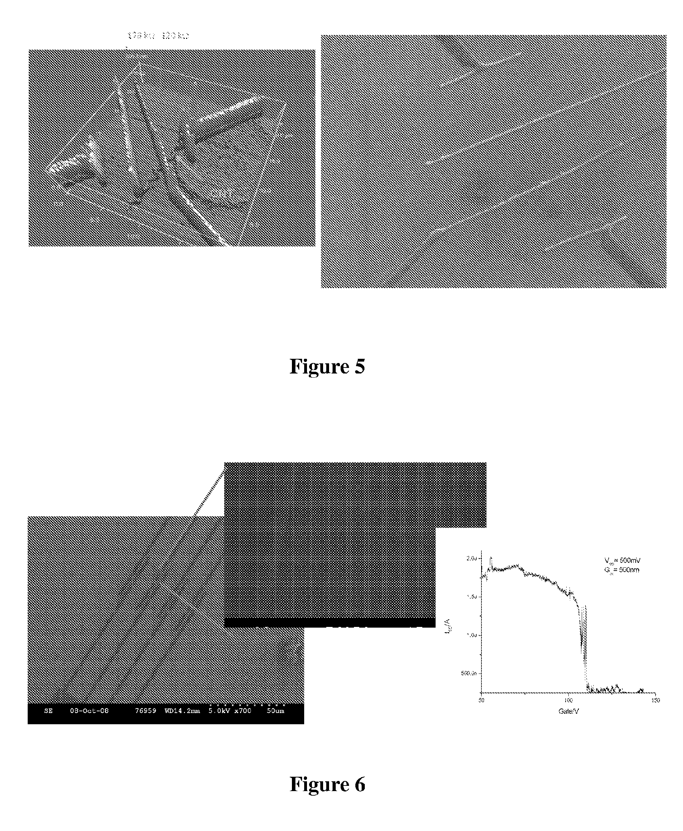

Referring to Figure 5 illustrates an AFM and SEM image of a carbon nanotube contacted with three carbon leads and measured resistance between them.

Referring to Figure 6 illustrates a transistor made entirely out of carbon made according of the invention. The curve shows the carbon transistor exhibits the same operational curve as a normal transistor

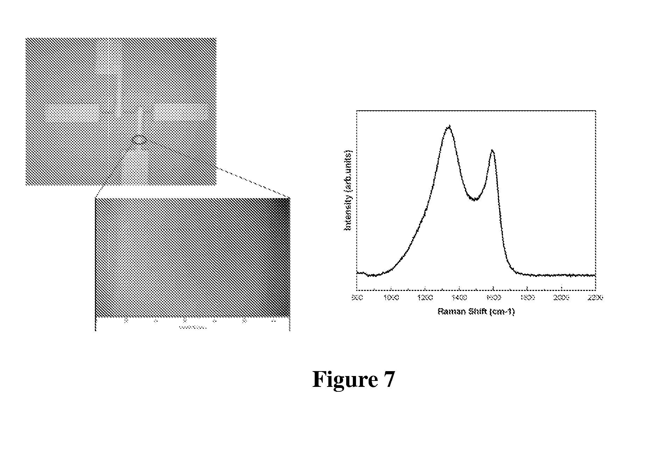

Referring to Figure 7 illustrates a four point measuring arrangement, with Contact pads, made entirely out of conducting carbon and raman spectrum of the carbon film.

It will be appreciated that the invention provides carbon-carbon composites which are mechanically stable, inert and have low resistance. The invention provides an improvement of conductivity and surface properties of CNT Networks and creates carbon-carbon contacts with low resistance.

The advantages of producing the nanostructure films according to the invention are that they make excellent transparent electrical contact to CNTs resulting in high temperature stable, chemical inert, flexible and bio-compatible structures.

Thin film electrodes that are CNT/graphene based, produced according to the invention, produce mechanically stabilised films and high strength thin films, with reduced surface roughness and reproducible surfaces. Improvement of conductivity is achieved due to contribution by film and due to improvement of contacts between tubes.

It will be appreciated that the structures made according to the invention can be used for packaging products, bio-sensing applications, ICT applications and high temperature applications of electronics.

An important application of the invention is in the area of medical devices. As the contact is entirely made of carbon and no metal exists makes the devices bio-compatible, made according to the present invention, and ideal for medical devices.

It will be appreciated the invention provides for the creation of all carbon circuits which are temperatures stable, bio-compatible, flexible and transparent.

In an alternative integration scheme Chemical Vapour Deposition (CVD) carbon contacts can be deposited on top of the carbon tubes.

In the context of the present invention the term 'resin' should be interpreted broadly and is meant is meant to encompass any type of polymer suitable for use as a resin, and also when used in lithography. Furthermore in the context of the present invention the term 'Carbon Carbon Composite' is used to describe a composite made of Carbon (nano-) particles, such as nanotubes or graphene, incorporated into a matrix which is predominately made of carbon, and can be in particular glassy carbon or pyrolytic carbon.

While the invention has been described herein with reference to several especially preferred embodiments, these embodiments have been presented by way of example only, and not to limit the scope of the invention. Additional embodiments thereof will be obvious to those skilled in the art having the benefit of this detailed description, especially to meet specific requirements or conditions. Further modifications are also possible in alternative embodiments without departing from the inventive concept.

The invention is not limited to the embodiments hereinbefore described but may be varied in both construction and detail.

## Claims

1. A method of making a nano-carbon structure comprising:
providing a first layer of nano-carbon particles;
depositing a second layer of resin on said layer of nano-carbon particles; and
annealing said first and second layers to provide a carbon composite nanostructure.

2. The method of claim 1 wherein the deposited layer of resin mixes with said layer of nano-carbon particles to provide a resin matrix.

3. The method of any preceding claim wherein the step of annealing is performed in an inert gas atmosphere or a vacuum.

4. The method of any preceding claim wherein the step of annealing said first and second layers produces glassy carbon material.

5. The method of claim 4 wherein the glassy carbon comprises conductive and inert properties.

6. The method of any preceding claim wherein the step of annealing is performed at approximately 1000 degrees centigrade.

7. The method of claim 6 wherein the annealing temperature is attained by having a temperature ramp rate of approximately 100 degrees centigrade per hour.

8. The method as claimed in any preceding claim wherein the step of providing the layer of nano-carbon particles comprises depositing thin layers of less than 10nm.

9. The method of any preceding claim wherein the nano-carbon particles and the resin are premixed together and deposited as a single layer.

10. The method of any preceding claim wherein before said annealing step said method comprises the step of structuring said nano-carbon structure either by photo- or e-beam lithography; and establishing an electrical contact by said annealing step.

11. A nano-carbon composite produced according to the method of any preceding claim.

12. An electrical conducting structure produced according to the method of any of claims 1 to 10.

13. A carbon transistor produced according to the method of any of claims 1 to 10.

14. A sensor produced according to the method of any of claims 1 to 10.

15. A bio compatible device produced according to the method of any of claims 1 to 10.
